# EUROPEAN PATENT APPLICATION

(11) **EP 4 653 726 A1**
(43) Date of publication of application: **26.11.2025**
(21) Application number: 25176589.7
(22) Date of filing: 15.05.2025
(51) Int. Cl.: F16H 3/093

(54) **TANDEM THREE-SHAFT EIGHT-SPEED SEQUENTIAL GEARBOX**

(30) Priority: 17.05.2024 SK 500302024; 17.05.2024 SK 500492024 U
(71) Applicant: Technická Univerzita V Kosiciach, 04200 Kosice-Sever (SK)
(72) Inventor: Palko, Miroslav, 040 23 Kosice (SK); Palko, Maros, 040 23 Kosice (SK); Zivcák, Jozef, 080 01 Presov (SK); Vrabel', Marek, 080 06 Presov - Nizná Sebastová (SK); Brestovic, Tomás, 082 03 Lemesany (SK)

(57) **Abstract**

A tandem three-shaft sequential gearbox comprising an input shaft (1), a secondary shaft (2), a tertiary shaft (3), and an output shaft (9), four gear sets (4, 5, 6, 7), sliders (10), dog clutches (13), and shift forks (12) with linear actuators (11), wherein the gear sets (4, 5, 6) are formed by gear triplets and the gear set (7) by a gear quartet. The output shaft (9) is arranged non-coaxially and is connected via gear set (8) to the secondary and tertiary shafts. The dog clutches (13) are symmetrically arranged on both sides of the gear wheels and include axial teeth with chamfering at an angle α.

## Description

### Field of invention

The tandem three-shaft eight-speed sequential gearbox belongs to the field of mechanical engineering, specifically to the field of automotive technology and mechanical transmission systems for racing vehicles.

### Background to the invention

Sequential gearboxes are mechanical transmission systems that are widely used in motorsport applications, particularly in racing vehicles, where shifting speed and reliability are crucial. These gearboxes allow drivers to change gears sequentially, meaning that the gear ratios are engaged in a step-by-step manner, one after the other, without the possibility of skipping gears. This arrangement provides significant advantages in terms of shifting speed and smoothness, which is essential for achieving high performance during competitions.

There are various types of sequential gearboxes, including two-shaft and three-shaft systems. Three-shaft gearboxes provide better load distribution and may improve power transmission efficiency; however, they lack tandem drive of the output shafts, which increases their overall weight and dimensions. Tandem drive enables more efficient power transmission and reduces the overall weight, complexity, and size of the gearbox.

Many of these gearboxes are designed with respect to the specific needs of motorsport applications, including weight optimization, compactness, and resistance to high loads. Nevertheless, there are some significant drawbacks in state of the art. One of the main disadvantages is that many of these gearboxes are not adapted for quick disassembly and the potential fast replacement of the final drive without the need to remove the gearbox from the vehicle. This can be critical during racing events, where the time available for repairs and adjustments is very limited. Another issue is that many of these gearboxes have dog clutches only on one side of the gear wheel, which leads to frequent replacements of entire gear wheels when the dog clutches wear out. This increases maintenance costs and reduces vehicle reliability during races. Additionally, traditional sequential gearboxes are prone to excessive wear under high loads, leading to frequent repairs and replacement of parts. This is particularly problematic in motorsport, where the reliability and durability of components are essential for achieving success.

Despite advancements in the field of sequential gearboxes, there is still room for improvement, particularly in terms of reliability, ease of maintenance, and optimization for specific applications.

### Summary of the invention

The tandem three-shaft eight-speed sequential gearbox represents an innovative invention that has the potential to overcome many of these existing issues and bring new advantages to motorsport applications. The tandem three-shaft eight-speed sequential gearbox represents an invention that addresses the demanding requirements of motorsport, such as high power transmission efficiency, reliability, low weight, and ease of maintenance. The core concept lies in the use of a tandem arrangement of gear wheels on the input shaft, secondary shaft, and tertiary shaft, achieving optimal load distribution and compactness of the entire assembly. The input shaft is equipped with four gear wheels that are in constant mesh with the corresponding gear wheels on the secondary shaft and the tertiary shaft. This tandem arrangement forms four functional gear triplets and one gear quartet in constant mesh, of which three triplets ensure power transmission to two gear ratios each, enabling a total of six forward gears. The fourth triplet forms the constant gear set between the output shaft and the secondary and tertiary shafts. The functional gear quartet represents the seventh forward gear and one gear ratio intended for reverse (reverse gear). This invention minimizes the number of required gear wheels, thereby reducing the weight and spatial demands of the gearbox mechanism.

The output shaft is arranged non-coaxially with respect to the input shaft, ensuring optimal spatial arrangement of the entire gearbox. It is a separate, short output shaft that is directly connected via a gear set to the constant drives of the secondary and tertiary shafts. This invention enables quick and easy replacement of the final drive without the need for complete disassembly of the gearbox from the vehicle. This structural feature significantly contributes to improved mechanical properties of the gearbox, such as optimized weight distribution and reduced rotational moments.

The gear ratios are changed by means of sliding sleeves (dog sliders) with dog clutches mounted on the secondary and tertiary shafts. These sliders allow axial movement and secure mechanical engagement of the gear wheels with the shafts during operation. The axial dog clutches engage with corresponding clutch teeth on the inner circumference of the gear wheels, ensuring a stable connection. The mechanism is designed to eliminate any relative movement between the gear wheel and the shaft, thereby reducing the risk of wear and increasing service life.

An innovative feature of this gearbox is the angle α, which is part of the locking mechanism of the dog clutch. This angle represents a chamfer on the edge of the dog clutch of the slider and a corresponding chamfer on the edge of the dog clutch integrated into the gear wheel into which it engages. The locking mechanism of the dog clutch therefore consists of the mechanical engagement of the slider's dog clutch with the gear wheel's dog clutch at an angle α, which ensures a stable connection. This invention prevents unintentional disengagement of the slider from the gear wheel during engagement.

The angle α is not variable during operation, but it can be adjusted during the manufacturing of the gearbox according to shifting requirements-for example, depending on the expected load or shifting dynamics. This allows for optimization of the forces required for clutch engagement as well as overall shifting reliability. A suitable range for the angle α is between 3° and 15°. The locking mechanism utilizes precise kinematics of axial dog clutches, which interact with the dog clutches on the gear wheels. Activation of the locking mechanism is carried out by linear actuators that ensure precise axial movement of the slider. This process is designed for fast and reliable gear shifting without time delay. The mechanism eliminates axial displacement under load and maximizes the efficiency of power transmission.

The reverse function is ensured by means of a special gear quartet for reverse. This gear set includes an idler gear that changes the rotation direction of the output shaft when the eighth gear is engaged. This mechanism enables efficient reverse rotation with high mechanical reliability and low energy losses, while maintaining the compactness of the entire gearbox. The tandem three-shaft eight-speed sequential gearbox provides a comprehensive solution for applications requiring high performance and reliability. The combination of low weight, compact design, and technical innovations-such as the angle α and the precise dog clutch mechanism-makes it ideally suited for use in racing vehicles. Its technical characteristics ensure long-term reliability, low maintenance requirements, and a significant improvement in performance parameters within the field of motorsport.

### Brief description of the drawings

Fig. 1 shows a view of the tandem three-shaft eight-speed sequential gearbox with shafts and gear sets.
Fig. 2 shows the roller-free gear shifting using linear actuators and shift forks.
Fig. 3 shows the double-sided symmetrical internal dog clutches and the locking angle α.

### Detailed description

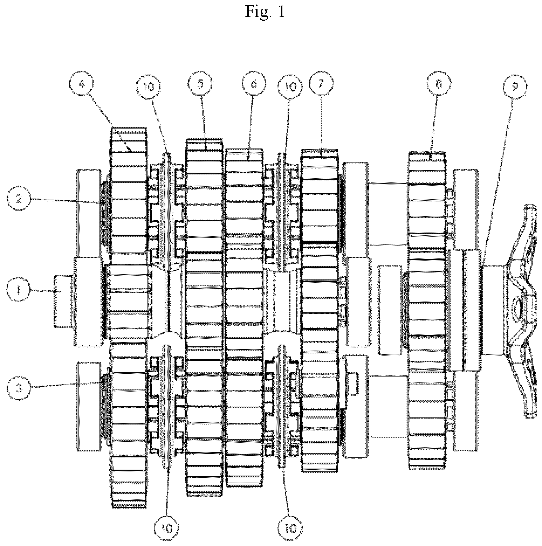

The tandem three-shaft eight-speed sequential gearbox consists of three main shafts: an input shaft 1, a secondary shaft 2, and a tertiary shaft 3. The input shaft 1 is equipped with four gear wheels that are in constant mesh with the corresponding gear triplets 4, 5, 6 on the secondary shaft 2 and the tertiary shaft 3. Figure 1 illustrates the tandem arrangement of these shafts and the gear sets 4, 5, 6, 7, 8, which are in constant mesh.

This tandem arrangement of gear wheels forms three functional gear triplets that provide power transmission to two gear ratios each, enabling six forward gears. The fourth gear triplet forms the constant gear set between the output shaft and the secondary and tertiary shafts. The functional gear quartet represents the seventh forward gear and one gear ratio intended for reverse (reverse gear). This design minimizes the number of required gear wheels, thereby reducing weight and increasing structural compactness.

The input shaft 1 transmits torque via gear sets 4, 5, 6, 7 to the secondary shaft 2 and the tertiary shaft 3. The secondary shaft 2 transmits power for odd-numbered gear ratios (1st, 3rd, 5th, 7th), while the tertiary shaft 3 transmits power for even-numbered gear ratios (2nd, 4th, 6th, 8th) (Figure 1).

The output shaft 9 is arranged non-coaxially with respect to the input shaft 1, which allows for optimization of the gearbox's spatial layout (Figure 1). This shaft is directly connected to the secondary shaft 2 and the tertiary shaft 3 via the gear set 8. This configuration enables quick replacement of the final drive without the need to disassemble the entire gearbox from the vehicle, thereby increasing practicality and maintenance efficiency.

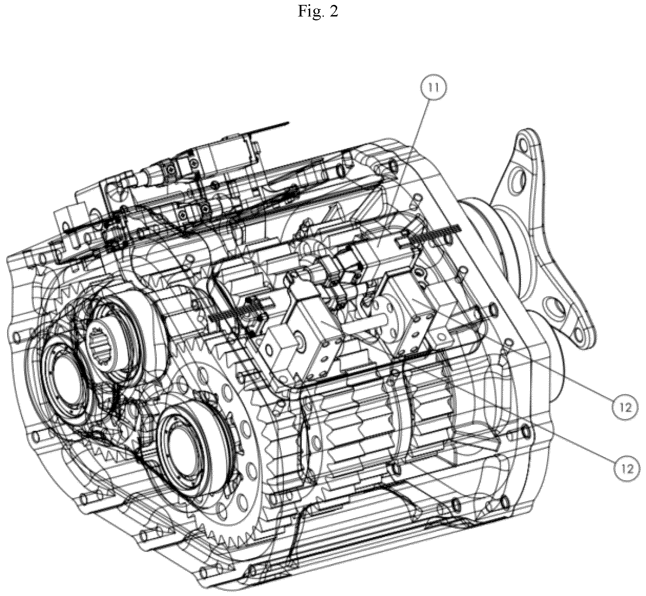

Shifting of individual gear ratios is carried out by an innovative roller-free system that uses a set of four linear actuators 11 (Figure 2). These actuators position the shift forks 12, which ensure precise axial movement of the dog sliders 10. The sliders 10 are mounted on the secondary shaft 2 and the tertiary shaft 3 and serve to select the desired gear ratio.

The shiftdrum-free shifting concept eliminates the need for a traditional shift drum (in this case, two shift drums), thereby increasing the reliability of the mechanism and reducing its wear (Figure 2). The linear actuators 11 enable fast and smooth gear changes, which is essential for demanding motorsport applications.

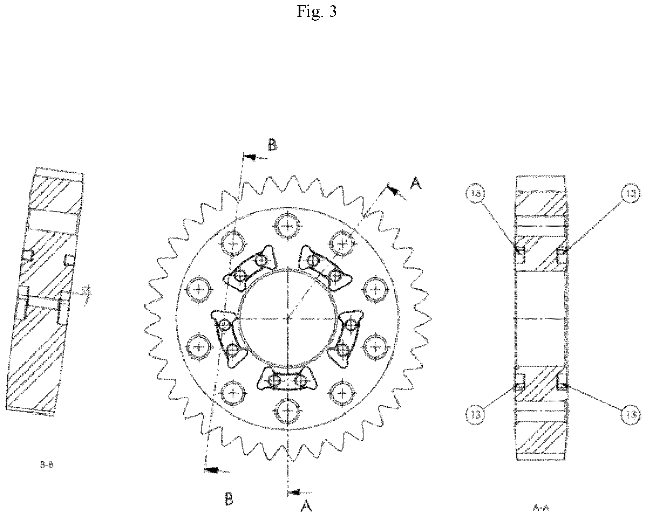

The locking mechanism of the dog clutch 13 is designed with an angle α, which ranges from 3° to 15° (Figure 3). This angle ensures an optimal balance between the force required for locking and the reliable fixation of the gear wheel on the shaft. The axial dog clutches engage precisely shaped clutch teeth on the inner circumference of the gear wheels, ensuring a secure connection without relative movement.

Reverse rotation of the output shaft 9 is ensured by the reverse gear set 7, which includes an idler gear. When the eighth gear is engaged, this gear is activated and changes the rotation direction of the output shaft. This mechanism enables efficient and energy-saving reverse rotation while maintaining structural compactness and high mechanical reliability.

The tandem three-shaft eight-speed sequential gearbox excels in its versatility, reliability, and practicality. The main advantages include:
- Easy maintenance: Enables quick replacement of the final drive without the need to disassemble the entire gearbox from the vehicle.
- Long-term reliability: Large double-sided symmetrical dog clutches extend the service life of the gear wheels and reduce maintenance costs.
- High performance: The efficient tandem arrangement and precise shifting mechanism ensure optimal power transmission under high loads.
- Applicability: This gearbox is ideal for motorsport applications where key factors include low weight, compactness, and fast gear shifting.

### Industrial applicability

The tandem three-shaft eight-speed sequential gearbox offers broad industrial applicability, particularly in the field of motorsport, where high performance, speed, and reliability of transmission systems are essential. Its innovative design and technical solutions make it suitable for deployment in various types of racing vehicles, including rear-wheel-drive cars commonly used in competitions.

Thanks to the tandem drive of the secondary shaft and the tertiary shaft, which reduces the weight and dimensions of the tandem three-shaft eight-speed sequential gearbox, this gearbox is ideal for sports cars where every reduction in weight and space optimization is crucial for achieving better driving characteristics and overall vehicle performance. The weight savings compared to other eight-speed sequential gearboxes increase vehicle agility and reduce engine load, which can lead to improved fuel efficiency and extended service life of mechanical components.

The innovative gear shifting system without a traditional shift drum, which uses a set of four linear actuators and shift forks, provides fast and precise gear changes. This invention reduces maintenance requirements and increases reliability, which is especially important under demanding racing conditions where every second can be decisive.

Gear wheels with double-sided symmetrical internal dog clutches and the locking principle with angle α allow them to be rotated when worn, thereby extending the service life of the tandem three-shaft eight-speed sequential gearbox and minimizing operating costs. This invention is beneficial not only for racing teams that require fast and efficient repairs and maintenance, but also for broader industrial applications where maintenance and operational costs are significant factors.

The universal housing of the tandem three-shaft eight-speed sequential gearbox, which allows mounting to any engine using a suitable flange, increases the flexibility and adaptability of the tandem three-shaft eight-speed sequential gearbox for various types of vehicles and motorsport applications. This feature enables automotive manufacturers and motorsport teams to quickly integrate the tandem three-shaft eight-speed sequential gearbox into existing vehicles without the need for extensive modifications.

Overall, the tandem three-shaft eight-speed sequential gearbox represents a significant step forward in transmission technology for motorsport, delivering higher performance, improved reliability, and cost savings-thus creating substantial industrial advantages and added value for users.

## Claims

1. A tandem three-shaft sequential gearbox comprising an input shaft (1), a secondary shaft (2), a tertiary shaft (3), an output shaft (9), five gear sets (4, 5, 6, 7, 8), sliders (10) with dog clutches (13), and a shifting mechanism (11, 12), wherein:
the gear sets (4, 5, 6) are formed by triplets of gear wheels, each gear set consisting of a gear wheel mounted on the input shaft (1), a gear wheel mounted on the secondary shaft (2), and a gear wheel mounted on the tertiary shaft (3), all of which are in constant mesh with each other, the fourth gear set (7) is formed by a quartet of gear wheels, with one gear wheel mounted on each of the shafts (1, 2, 3) and one separate gear wheel that enables reverse rotation of the output shaft (9), the output shaft (9) is arranged non-coaxially with respect to the input shaft (1) and is connected via gear set (8) to the constant drive of the secondary shaft (2) and the constant drive of the tertiary shaft (3), the sliders (10) are movably mounted on the secondary shaft (2) and the tertiary shaft (3), providing mechanical engagement with the gear wheels by means of axial dog clutches.

2. A tandem three-shaft sequential gearbox according to claim 1, wherein the dog clutches (13) are symmetrically arranged on both sides of each gear wheel and comprise a locking mechanism formed by axial dog clutches with chamfering at an angle α, which corresponds to the chamfer shape on the corresponding dog clutches of the gear wheels, wherein the angle α is selected during manufacturing according to operational requirements.

3. A tandem three-shaft sequential gearbox according to claim 1 or 2, wherein the shifting mechanism consists of a set of four linear actuators (11) that provide axial movement of the sliders (10) via shift forks (12).
